# EUROPEAN PATENT APPLICATION

(11) **EP 2 177 246 A1**
(43) Date of publication of application: **21.04.2010**
(21) Application number: 08018056.5
(22) Date of filing: 15.10.2008
(51) Int. Cl.: A62C 2/06, F16L 5/04, B32B 19/02

(54) **Sleeves for lining wall and ceiling openings**

(71) Applicant: Instumescent Systems Limited, Dover Kent CT15 7JG (GB)
(72) Inventor: Ward, Derek, Kent, CT 15 7 JG (GB)
(74) Representative: Sayer, Robert David

(57) **Abstract**

A tubular sleeve for lining a wall or ceiling opening for *inter alia* a service conduit includes one or more flexible sheets of exfoliating material shaped to define a tube housed within an outer sheath comprising a sheet of glass cloth to which is adhered an outer layer of metallic foil. Each sheet of exfoliating material comprises a mix of exfoliating material, rockwool fibres and an elastomeric binder. The mix has from 12% to 20% by weight of elastomeric binder and at least 20% by weight of rockwool fibres.

## Description

This invention relates to flexible tubular sleeves for lining wall and ceiling openings of a building and for sealing such openings in the event of fire.

A problem facing architects and engineers designing and building residential and industrial property is that of preventing, in the event of a fire, the spread of fire and smoke through and long service conduits and other openings in walls and ceilings through which pipes, conduits and other services pass (referred to below as "service conduits"). Conventionally, openings are lined with relatively loose fitting metal sleeves which, in the event of fire, provide no effective barrier to the passage of fire and smoke from one room to an adjacent room or passageway.

One object of the present invention is to provide a tubular steel for lining a wall or ceiling opening which is sufficiently flexible to provide a close fit within the opening and with a service conduit passing there through, and which exfoliates in the presence of a fire substantially to fill the opening to inhibit the passage of fire and smoke.

In one aspect the invention provides a tubular sleeve for lining a wall or ceiling opening for *inter alia* a service conduit, the sleeve being **characterised in that** it includes one or more flexible sheets of exfoliating material shaped to define a tube housed within an outer sheath comprising a sheet of glass cloth to which is adhered an outer layer of metallic foil, each sheet of exfoliating material comprising a mix of exfoliating material, rockwool fibres and an elastomeric binder, the mix comprising from 12% to 20% by weight of elastomeric binder and at least 20% by weight of rockwool fibres.

The exfoliating material may be exfoliating graphite.

The metallic foil may be adhered to the glass cloth using double-sided tape.

In another aspect, the invention provides a tubular sleeve for lining an opening in a wall or ceiling, the sleeve being of a size to permit one or more service conduits or the like to be inserted there through, the sleeve being **characterised in that** it comprises a tubular body formed from sheets of exfoliating material to whose external surface is adhered a sheath comprising an inner sheet of glass cloth and an outer layer of metallic foil, each sheet of exfoliating material comprising a substantially homogenious mix comprising exfoliating graphite, rockwool fibres and an elastomeric binder.

Preferably, the rockwool fibres are present in an amount of up to 70% by weight of the material.

The elastomeric binder may comprise acrylic latex.

The material may comprise 60% by weight rockwool fibres, 25% by weight exfoliating graphite and 15% acrylic latex elastomeric binder.

Alternatively, the material may comprise 35% by weight rockwool fibres, 50% by weight exfoliating graphite and 15% by weight acrylic latex elastomeric binder.

In a further embodiment, the material comprises 25% by weight rockwool fibres, 60% by weight exfoliating graphite and 15% acrylic latex elastomeric binder.

The elastomeric binder may be selected from, for example, a styrene butadiene latex, a synthetic rubber latex and polyvinylidene dichloride.

The concentration of exfoliating graphite used will generally depend upon the extent of intumescence required and the degree of expansion which the sheet is required to produce in a given application. The greater the concentration of exfoliating graphite, the greater the degree of expansion produced by the sheet material in the event of fire.

The sheet material is preferably produced by one of the methods described in our patent GB 2273100B.

In use, sleeves in accordance with this invention have sufficient flexibility for them to be positioned as a relatively close fit within a wall or ceiling opening through which a service conduit or the like is to pass. The conduit may, for example, be produced from a metal or plastics material. The sleeve ends may be trimmed if necessary and the sleeve may be secured to the opening periphery by any suitable means. The conduit is then pushed through the sleeve with the sleeve internal surface in close contact with the external surface of the conduit. Alternatively, the sleeve is positioned around the conduit before the assembly is located within the opening. In this latter case the sleeve may be attached to the conduit with, for example, double-sided tape.

In the event of a fire, the exfoliating content of the sleeve intumesces to seal the opening to prevent the passage of smoke and fire to the neighbouring room or corridor.

It will be appreciated that the fire and smoke resistant sleeves described are merely exemplary of sleeves in accordance with the invention and that modifications can be made thereto without departing from the true scope of the invention as set out in the appended claims.

## Claims

1. A tubular sleeve for lining a wall or ceiling opening for *inter alia* a service conduit, the sleeve being **characterised in that** it includes one or more flexible sheets of exfoliating material shaped to define a tube housed within an outer sheath comprising a sheet of glass cloth to which is adhered an outer layer of metallic foil, each sheet of exfoliating material comprising a mix of exfoliating material, rockwool fibres and an elastomeric binder, the mix comprising from 12% to 20% by weight of elastomeric binder and at least 20% by weight of rockwool fibres.

2. A sleeve as claimed in claim 1 **characterised in that** the exfoliating material is exfoliating graphite.

3. A sleeve as claimed in claim 1 or claim 2 **characterised in that** the metallic foil is adhered to the glass cloth using double-sided tape.

4. A tubular sleeve for lining an opening in a wall or ceiling, the sleeve being of a size to permit one or more service conduits or the like to be inserted there through, the sleeve being **characterised in that** it comprises a tubular body formed from sheets of exfoliating material to whose external surface is adhered a sheath comprising an inner sheet of glass cloth and an outer layer of metallic foil, each sheet of exfoliating material comprising a substantially homogenious mix comprising exfoliating graphite, rockwool fibres and an elastomeric binder.

5. A sleeve a claimed in any one of the preceding claims **characterised in that** the rockwool fibres are present in an amount of up to 70% by weight of the material.

6. A sleeve as claimed in any one of the preceding claims **characterised in that** the elastomeric binder comprises acrylic latex.

7. A sleeve as claimed in any one of the preceding claims **characterised in that** the exfoliating material comprises 60% by weight rockwool fibres, 25% by weight exfoliating graphite and 15% acrylic latex elastomeric binder.

8. A sleeve as claimed in any one of claims 1 to 6 **characterised in that** the material comprises 35% by weight rockwool fibres, 50% by weight exfoliating graphite and 15% by weight acrylic latex elastomeric binder.

9. A sleeve as claimed in any one of claims 1 to 6 **characterised in that** the exfoliating material comprises 25% by weight rockwool fibres, 60% by weight exfoliating graphite and 15% acrylic latex elastomeric binder.

10. A sleeve as claimed in any one of the preceding claims **characterised in that** the elastomeric binder is selected from, for example, a styrene butadiene latex, a synthetic rubber latex and polyvinylidene dichloride.
